# EUROPÄISCHE PATENTANMELDUNG

(11) **EP 3 327 327 A1**
(43) Veröffentlichungstag der Anmeldung: **30.05.2018**
(21) Anmeldenummer: 16200513.6
(22) Anmeldetag: 24.11.2016
(51) Int. Cl.: F16L 5/04

(54) **INTUMESZENZ-BRANDSCHUTZVORRICHTUNG, DURCHBRUCH IN EINER WAND ODER EINER DECKE SOWIE VERFAHREN ZUR HERSTELLUNG VON INTUMESZENZ-BRANDSCHUTZVORRICHTUNGEN**

(71) Anmelder: HILTI Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Eine Intumeszenz-Brandschutzvorrichtung zum Verschließen von Durchbrüchen (24) in Wänden (26) oder Decken hat einen flexiblen bandförmigen oder ringförmigen Basisabschnitt (12) und mehrere Lamellen (14), die sich vom Basisabschnitt (12) aus erstrecken und einstückig mit dem Basisabschnitt (12) ausgeführt sind. Der Basisabschnitt (12) und/oder die Lamellen (14) sind zumindest teilweise aus einem intumeszierenden Material hergestellt oder zumindest teilweise mit einer intumeszierenden Beschichtung (22) versehen.

Ferner ist ein Durchbruch (24) und ein Verfahren zur Herstellung von Intumeszenz-Brandschutzvorrichtungen (10) gezeigt.

## Beschreibung

Die Erfindung betrifft eine Intumeszenz-Brandschutzvorrichtung zum Verschließen von Durchbrüchen in Wänden oder Decken, einen Durchbruch in einer Wand oder einer Decke, mit einer Innenwand und einer an der Innenwand anliegenden Intumeszenz-Brandschutzvorrichtung sowie ein Verfahren zur Herstellung von Intumeszenz-Brandschutzvorrichtungen.

Brandschutzwände und -decken unterliegen besonderen Vorschriften in Hinsicht auf ihre Rauchdurchlässigkeit und Feuerbeständigkeit. Jedoch müssen auch durch Brandschutzwände Leitungen, Rohre oder andere Objekte hindurchgeführt werden. Hierzu werden Durchbrüche in die Brandschutzwand eingebracht, um die Objekte durchzuführen. Durch diese Durchbrüche werden allerdings die Eigenschaften der Wand oder Decke als Brandschutzwand beeinträchtigt, sodass die Durchbrüche wieder verschlossen werden müssen.

Hierzu werden Intumeszenz-Brandschutzvorrichtungen verwendet, die ein intumeszierendes Material aufweisen und die die brennbaren Leitungen oder Rohre im Durchbruch umgeben. Im Falle eines Brandes brennt das Material der Leitungen oder der Rohre weg, wodurch ein unerwünschter Hohlraum entsteht. Dieser Hohlraum wird durch das Aufblähen des intumeszierenden Materials der Intumeszenz-Brandschutzvorrichtung wieder rauch- und feuerfest verschlossen.

Die verwendeten intumeszierenden Materialien benötigen jedoch meist eine Temperatur von wenigstens ca. 200 °C, damit die Intumeszenz, also das Aufblähen des intumeszierenden Materials, in Gang gesetzt wird.

In der Regel haben die Leitungen oder Rohre jedoch einen Schmelzpunkt unter 200 °C, sodass die Leitungen oder Rohre wegbrennen oder schmelzen, noch bevor die Intumeszenz einsetzt. Die Hohlräume entstehen also, bevor die Intumeszenz in Gang gesetzt wird, und müssen dann möglichst schnell geschlossen werden.

Problematischerweise stehen bei üblichen Intumeszenz-Brandschutzvorrichtungen lediglich die Stirnseiten der Intumeszenz-Brandschutzvorrichtung in direktem Kontakt mit dem Feuer, wodurch lediglich an der Stirnseite die Intumeszenz rasch in Gang gesetzt wird. Durch das Aufblähen an der Stirnseite werden jedoch die weiteren, vom Feuer abgewandten Bereiche der Intumeszenz-Brandschutzvorrichtung gegenüber dem Feuer isoliert, sodass in diesen weiteren Bereichen die Intumeszenz viel später einsetzt.

Es ist somit Aufgabe der Erfindung, eine Intumeszenz-Brandschutzvorrichtung zum Verschließen von Durchbrüchen in Wänden oder Decken sowie ein Verfahren zur Herstellung von Intumeszenz-Brandschutzvorrichtungen bereitzustellen, die die Hohlräume, die durch den Abbrand der Leitungen entstehen, schnell und vollständig verschließen.

Die Aufgabe wird gelöst durch eine Intumeszenz-Brandschutzvorrichtung zum Verschließen von Durchbrüchen in Wänden oder Decken, mit einem flexiblen bandförmigen oder ringförmigen Basisabschnitt und mehreren Lamellen, die sich vom Basisabschnitt aus erstrecken und einstückig mit dem Basisabschnitt ausgeführt sind, wobei der Basisabschnitt und/oder die Lamellen zumindest teilweise aus einem intumeszierenden Material hergestellt oder zumindest teilweise mit einer intumeszierenden Beschichtung versehen sind. Der Basisabschnitt ist aus einem flexiblen und verbiegbaren Material hergestellt. Der Basisabschnitt kann einstückig oder mehrteilig ausgeführt sein. Insbesondere ist er bandförmig, sodass sich die gewünschte Länge des Basisabschnittes einfach zurechtschneiden lässt.

Hierbei sollen durch den Begriff "Durchbrüchen in Wänden oder Decken" auch solche Durchbrüche umfasst werden, die zur Durchführung von Rohrleitungen, insbesondere Abwasserrohren, im Untergrund dienen.

Durch die Lamellen entstehen zwischen den Lamellen und dem Basisabschnitt Kanäle für heißen Rauch und Feuer, sodass die Oberfläche der Beschichtung vergrößert wird, die Rauch oder Feuer ausgesetzt ist. Durch diese im Vergleich zu starren, ringförmigen Intumeszenz-Brandschutzvorrichtungen größere Oberfläche kann Feuer oder heißer Rauch schneller zu einer Erwärmung der gesamten Intumeszenz-Brandschutzvorrichtung führen. Somit wird die Temperatur, bei der die Intumeszenz einsetzt, rasch erreicht. Auf diese Weise können im Hohlraum entstandene Durchbrüche schneller verschlossen werden.

Das intumeszierende Material, aus dem der Basisabschnitt und/oder die Lamellen hergestellt sein können, ist beispielsweise ein Gummi, ein Polyurethan (PU) oder ein Ethylen-Propylen-Dien-Kautschuk (EPDM), dem intumeszierende Stoffe beigemischt wurden.

Vorzugsweise sind die Lamellen gegenüber dem Basisabschnitt beweglich, insbesondere können sie größtenteils zum Basisabschnitt hin verbogen werden. Dadurch können die Lamellen bei der Montage vorgespannt werden. Auf diese Weise federn die Lamellen, wenn eine im Durchbruch verlegte Leitung oder ein verlegtes Rohr zusammenbricht, in den Durchbruch hinein und vergrößern dabei die Kanäle zwischen dem Basisabschnitt und den Lamellen.

Die Bewegung der Lamellen vom Basisabschnitt weg kann dabei dadurch unterstützt werden, dass die intumeszierende Beschichtung zumindest im Bereich zwischen einer der Lamellen und dem Basisabschnitt vorgesehen sein kann.

Die Lamellen und/oder der Basisabschnitt können auch aus einem intumeszierenden Material oder im Wesentlichen vollständig beschichtet sein, wodurch die größtmögliche Menge an intumeszierender Beschichtung verwendet werden kann. Bei einer im Wesentlichen vollständigen Beschichtung sind die dem Basisabschnitt zugewandten und abgewandten Flächen beschichtet, wobei die Kanten der Lamellen unbeschichtet bleiben können.

Beispielsweise sind der Basisabschnitt und die Lamellen aus einem elastischen, insbesondere intumeszierenden Material hergestellt. Auf diese Weise lässt sich die Flexibilität vom Basisabschnitt und von den Lamellen einfach erreichen.

In einer Ausgestaltung der Erfindung sind alle Lamellen auf einer Seite des Basisabschnittes vorgesehen, wodurch der Basisabschnitt an die Wandung des Durchbruches angelegt werden kann.

Vorzugsweise weist der Basisabschnitt zwei gegenüberliegende Längsflächen auf, wobei sich die Lamellen von einer der Längsflächen aus erstrecken. Dabei können die Lamellen die gleiche Breite wie der Basisabschnitt aufweisen, sodass sie sich über die gesamte Breite des Basisabschnittes erstrecken. Auf diese Weise können lange Kanäle in der Intumeszenz-Brandschutzvorrichtung besonders effizient ausgebildet werden.

In einer weiteren Ausgestaltung der Erfindung weist der Basisabschnitt zwei gegenüberliegende Längskanten auf, wobei sich die Lamellen von einer der Längskanten aus erstrecken, wodurch die Herstellung der Intumeszenz-Brandschutzvorrichtung stark vereinfacht wird. Dabei können die Lamellen die gleiche Dicke wie der Basisabschnitt aufweisen.

Vorzugsweise ist wenigstens eine der Längsflächen des Basisabschnitts, insbesondere die von dem sich die Lamellen aus erstrecken, vollständig mit der intumeszierenden Beschichtung beschichtet, wodurch alle Seiten der Kanäle von intumeszierendem Material umgeben sind.

Die Lamellen können sich in einem spitzen Winkel vom Basisabschnitt aus erstrecken. Dabei bildet sich der spitze Winkel zum Beispiel zwischen der Längsrichtung des Basisabschnittes und den Lamellen. Die Lamellen können dabei insbesondere parallel zueinander verlaufen. Auf diese Weise wird der Einbau der Intumeszenz-Brandschutzvorrichtung in einem Durchbruch vereinfacht.

Beispielsweise können die Lamellen eingeschnitten sein, wodurch zwei gegeneinander bewegliche Lamellenteile erzeugt werden. Hierdurch lässt sich die Geschwindigkeit, mit der der Durchbruch im Brandfall verschlossen wird, weiter verbessern.

In einer weiteren Ausführungsvariante ist der Basisabschnitt selbst einstückig ausgeführt, wodurch die Intumeszenz-Brandschutzvorrichtung aus einem einzigen einfach zu handhabenden Teil ist.

Die Intumeszenz-Brandschutzvorrichtung kann durch ein Extrusionsverfahren hergestellt sein. Auf diese Weise lässt sich die Intumeszenz-Brandschutzvorrichtung einfach und kostengünstig herstellen.

Ferner wird die Aufgabe gelöst durch einen Durchbruch in einer Wand oder einer Decke, mit einer Innenwand und einer an der Innenwand anliegenden erfindungsgemäßen Intumeszenz-Brandschutzvorrichtung, wobei sich die Lamellen vom Basisabschnitt aus radial nach innen oder axial erstrecken.

Vorzugsweise sind die Lamellen gegenüber dem Basisabschnitt vorgespannt, wodurch sich die Lamellen schnell in den Durchbruch hinein bewegen können, wenn ein im Durchbruch verlegtes Rohr oder eine verlegte Leitung zusammenbricht.

Außerdem wird die Aufgabe gelöst durch ein Verfahren zur Herstellung von erfindungsgemäßen Intumeszenz-Brandschutzvorrichtungen mit den folgenden Schritten:
a) Extrusion eines im Wesentlichen quaderförmigen Halbzeugs, insbesondere aus einem intumeszierenden Material, und
b) symmetrisches Zerschneiden des Halbzeugs, sodass zwei Intumeszenz-Brandschutzvorrichtungen mit Lamellen und je einem Basisabschnitt ausgebildet werden.

Dieses Verfahren ermöglicht eine besonders effiziente und kostengünstige Herstellung von Intumeszenz-Brandschutzvorrichtungen, da das quaderförmige Halbzeug besonders kostengünstig aufgrund der einfachen Form hergestellt werden kann und durch das symmetrische Zerschneiden mit einem Schnitt gleichzeitig zwei Grundkörper für Intumeszenz-Brandschutzvorrichtungen erhalten werden.

Beispielsweise können die Intumeszenz-Brandschutzvorrichtungen nach dem Zerschneiden mit der intumeszierenden Beschichtung versehen werden. Das Beschichten der Grundkörper mit der intumeszierenden Beschichtung kann beispielsweise kostengünstig dadurch erfolgen, dass die Grundkörper durch oder in ein Bad aus dem intumeszierenden Material der Beschichtung getaucht werden.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 eine erfindungsgemäße Intumeszenz-Brandschutzvorrichtung ausgerollt in uneingebautem Zustand in perspektivischer Ansicht,
- Figur 2 eine Draufsicht auf einen erfindungsgemäßen Durchbruch mit der Intumeszenz-Brandschutzvorrichtung gemäß Figur 1 im eingebauten Zustand,
- Figur 3 den Durchbruch mit der Intumeszenz-Brandschutzvorrichtung nach Figur 2 während des Intumeszierens bei einem Feuer,
- Figur 4 den Durchbruch und die Intumeszenz-Brandschutzvorrichtung gemäß den Figuren 2 und 3 kurz vor dem Verschließen des Durchbruches,
- die Figuren 5a bis 5c perspektivisch die Intumeszenz-Brandschutzvorrichtungen nach verschiedenen Schritten des erfindungsgemäßen Verfahrens zur Herstellung,
- Figur 6 eine zweite Ausführungsform einer erfindungsgemäßen Intumeszenz-Brandschutzvorrichtung in perspektivischer Ansicht, und
- Figur 7 eine dritte Ausführungsform einer erfindungsgemäßen Intumeszenz-Brandschutzvorrichtung in perspektivischer Ansicht.

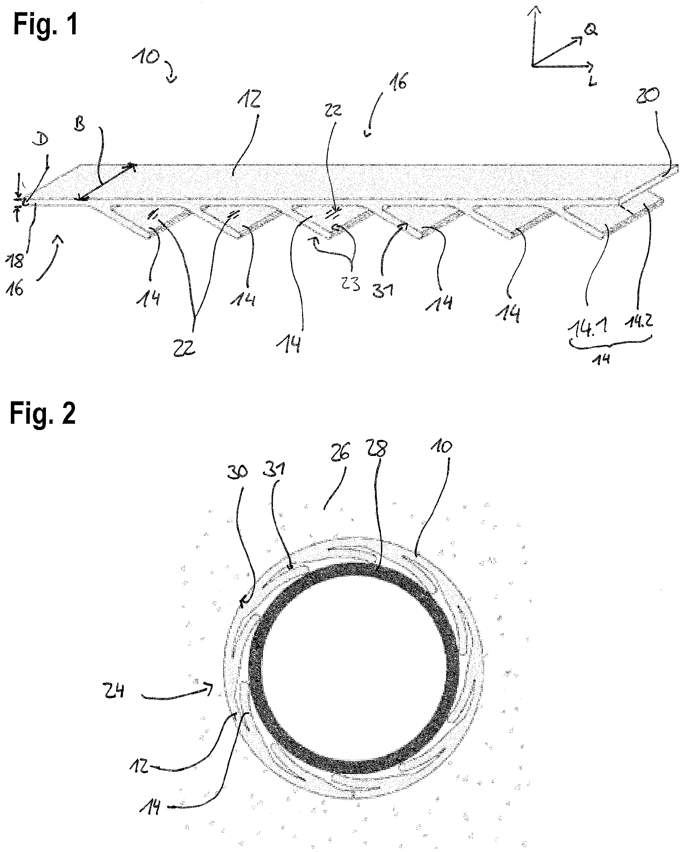

In Figur 1 ist eine Intumeszenz-Brandschutzvorrichtung 10 mit einem Basisabschnitt 12 und mehreren Lamellen 14 gezeigt.

Die Lamellen 14 sind einstückig mit dem Basisabschnitt 12 ausgeführt und gegenüber dem Basisabschnitt 12 beweglich.

Beispielsweise bestehen der Basisabschnitt 12 und die Lamellen 14 aus einem elastischen und intumeszierenden Material, sodass auch der Basisabschnitt 12 selbst flexibel ausgebildet ist.

Das elastische und intumeszierende Material ist beispielsweise ein Gummi, ein Polyurethan (PU) oder ein Ethylen-Propylen-Dien-Kautschuk (EPDM), dem intumeszierende Stoffe beigemischt wurden.

Der Basisabschnitt 12 ist bandförmig ausgeführt und definiert somit eine Längsrichtung L und eine Querrichtung Q. In der Ausführungsform nach Figur 1 ist der Basisabschnitt 12 auch einstückig.

Der Basisabschnitt 12 hat eine Breite B in Querrichtung Q und eine Dicke D senkrecht zu einer Ebene, die durch die Querrichtung Q und die Längsrichtung L aufgespannt wird.

Parallel zu der durch die Querrichtung Q und die Längsrichtung L aufgespannten Ebene weist der Basisabschnitt 12 zwei Längsflächen 16 auf, die einander gegenüberliegen.

Senkrecht zu den Längsflächen 16 wird der Basisabschnitt 12 von einer umlaufenden Kante begrenzt, die sich aus zwei Längskanten 18 parallel zur Längsrichtung L und zwei Querkanten 20 parallel zur Querrichtung Q ergibt.

Die Lamellen 14 verlaufen in der ersten gezeigten Ausführungsform in Querrichtung Q über die gesamte Breite B des Basisabschnittes 12, d.h. die Lamellen 14 haben die gleiche Breite B wie der Basisabschnitt 12.

Alle Lamellen 14 erstrecken sich von der gleichen Längsfläche 16 aus und sind parallel zueinander. Sie sind damit alle auf einer Seite des Basisabschnittes 12 vorgesehen.

Zum Beispiel schließen die Lamellen 14 dabei einen spitzen Winkel, in der gezeigten Ausführungsform etwa 45°, mit dem Basisabschnitt 12 ein. Genauer gesagt, entsteht der Winkel zwischen der Lamelle 14 im unmontierten Zustand und der Längsrichtung L des Basisabschnittes 12. Die Lamellen 14 verlaufen somit auch teilweise in Längsrichtung L. Durch den spitzen Winkel lassen sich die Lamellen 14 leicht in Richtung zum Basisabschnitt 12 hin verbiegen und dadurch vorspannen.

Außerdem können die Lamellen 14 eingeschnitten sein, wie durch die gestrichelte Linie in Figur 1 angedeutet ist, wodurch sich die Lamellen 14 aus zwei gegeneinander beweglichen Lamellenteilen 14.1, 14.2 zusammensetzen.

Denkbar ist auch, dass das Material, aus dem der Basisabschnitt 12 und die Lamellen 14 hergestellt sind, nicht selbst intumeszierend aber dennoch elastisch ist. In diesem Fall weist die Intumeszenz-Brandschutzvorrichtung 10 eine intumeszierende Beschichtung 22 auf, also eine Beschichtung, die intumeszierendes Material enthält. Das intumeszierende Material kann beispielsweise Blähgraphit sein. Die intumeszierende Beschichtung 22 ist in Figur 1 lediglich angedeutet.

In diesem Fall ist die intumeszierende Beschichtung 22 sowohl auf dem Basisabschnitt 12 als auch auf den Lamellen 14 vorgesehen, wobei die Lamellen 14 im Wesentlichen vollständig beschichtet sind, d.h. dass die dem Basisabschnitt 12 zugewandten und abgewandten Flächen 23 der Lamellen 14 beschichtet sind, wobei die Kanten der Lamellen 14 senkrecht zur Querrichtung Q unbeschichtet sein können.

Der Basisabschnitt 12 ist dann nur an seiner Längsfläche 16 beschichtet, von der aus sich die Lamellen 14 erstrecken, sodass im Bereich zwischen den Lamellen 14 und dem Basisabschnitt 12 intumeszierendes Material vorgesehen ist.

In Figur 2 ist ein Durchbruch 24 in einer Wand 26 dargestellt, durch den ein Rohr 28 oder eine Leitung verläuft.

Das Rohr 28 füllt den Durchbruch 24 jedoch nicht vollständig aus, sodass zwischen dem Rohr 28 und einer Innenwand 30 des Durchbruches 24 ein Spalt entsteht. In diesem Spalt ist die Intumeszenz-Brandschutzvorrichtung 10 angeordnet. Aus Gründen der Übersichtlichkeit sind in Figur 2 nur der Basisabschnitt 12 und die Lamellen 14 der Intumeszenz-Brandschutzvorrichtung 10 dargestellt und nicht auch noch die Beschichtung 22.

Zur Montage der Intumeszenz-Brandschutzvorrichtung 10 im Durchbruch 24 wurde der Basisabschnitt 12 auf eine Länge zurechtgeschnitten, die dem Umfang des Durchbruches 24 an der Innenwand 30 entspricht.

Die Intumeszenz-Brandschutzvorrichtung 10 wurde dann in den Spalt im Durchbruch 24 eingelegt, sodass der Basisabschnitt 12 einen Ring bildet.

Der Basisabschnitt 12 liegt mit seiner Längsfläche 16, an der keine Lamellen 14 vorgesehen sind, an der Innenwand 30 an. Die Lamellen 14 erstrecken sich von der der Innenwand 30 abgewandten Längsfläche 16 teilweise radial nach innen und somit auf der radial innen liegenden Seite des Basisabschnittes 12.

Die Lamellen 14 sind zum Basisabschnitt 12 hin verbogen und liegen auf dem Rohr 28 auf. In dieser Position sind die Lamellen 14 gegenüber dem Basisabschnitt 12 vorgespannt.

Im Falle eines Feuers im Bereich des Durchbruches 24 schmilzt zunächst das Rohr 28 und kollabiert. Dabei hinterlässt es einen Hohlraum im Durchbruch 24, der dann vollständig von der Intumeszenz-Brandschutzvorrichtung 10 umgeben ist. Durch den Hohlraum zieht dann heißer Rauch oder schlagen sogar Flammen.

Die Lamellen 14 bewegen sich, sobald das Rohr 28 zerstört wurde, aufgrund ihrer Vorspannung radial nach innen und erstrecken sich in den vom Rohr 28 erzeugten Hohlraum im Durchbruch 24.

Auf diese Weise bilden sich Kanäle 31 zwischen den einzelnen Lamellen 14 in der Intumeszenz-Brandschutzvorrichtung 10 aus, durch die dann die Flammen schlagen oder der Rauch zieht. Durch die Kanäle 31 wird die Oberfläche der Intumeszenz-Brandschutzvorrichtung 10 vergrößert, die mit dem heißen Rauch oder mit den Flammen in Berührung kommen kann.

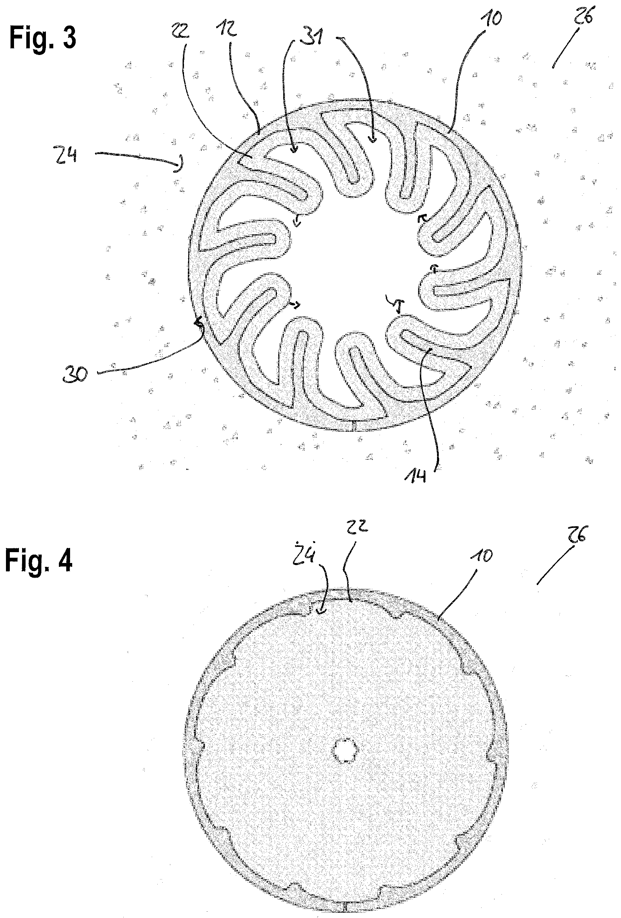

Durch den Rauch oder die Flammen wird nun die Intumeszenz-Brandschutzvorrichtung 10 schnell erhitzt, sodass die Intumeszenz einsetzt. Dabei blähen sich die Lamellen 14 und der Basisabschnitt 12 bzw. die Beschichtung 22 auf, wodurch die Lamellen 14 weiter in den Hohlraum hineingedrückt werden, wie in Figur 3 am Beispiel einer beschichteten Intumeszenz-Brandschutzvorrichtung 10 zu sehen ist.

Auch im Falle, dass die Vorspannung der Lamellen 14 alterungsbedingt nachgelassen hat, werden die Lamellen 14 durch das Einsetzen der Intumeszenz in den Hohlraum gedrückt, da sich die Beschichtung 22 oder das Material der Lamellen 14 aufbläht. Somit werden spätestens dann die Kanäle 31 ausgebildet.

Zum Beispiel können die Lamellen 14 durch die Kraft, die durch die Intumeszenz erzeugt wird, über ihre zu Figur 1 beschriebene Ruheposition hinaus von dem Basisabschnitt 12 weg verbogen werden, sodass sie teilweise nahezu senkrecht vom Basisabschnitt 12 in den Hohlraum hineinragen.

Hierdurch werden die Kanäle 31 weiter vergrößert, wodurch auch die Oberfläche der Intumeszenz-Brandschutzvorrichtung 10, die mit Rauch oder Feuer in Berührung kommt, weiter vergrößert wird. Auf diese Weise wird ein sich selbst verstärkender Effekt erzielt, der zu einem schnellen Aufblähen der Lamellen 14 und des Basisabschnittes 12 bzw. der Beschichtung 22 führt. Insbesondere entstehen durch die Bewegung, die durch das Aufblähen der Lamellen 14 bzw. der Beschichtung 22 erzeugt wird, keine oder kleinere Bereiche der Beschichtung 22, die auf der vom Feuer abgewandten Seite der Intumeszenz-Brandschutzvorrichtung 10 liegen und die wie bei üblichen Intumeszenz-Brandschutzvorrichtungen durch bereits aufgeblähte Teile isoliert werden.

Die Lamellen 14 und der Basisabschnitt 12 bzw. die intumeszierende Beschichtung 22 bläht sich folglich zügig auf, bis schließlich der gesamte Durchbruch 24 verschlossen ist und ggf. auch die Lamellen 14 von der Beschichtung 22 umgeben sind. In Figur 4 ist eine Situation kurz vor dem vollständigen Verschließen des Durchbruches 24 am Beispiel einer beschichteten Intumeszenz-Brandschutzvorrichtung 10 gezeigt.

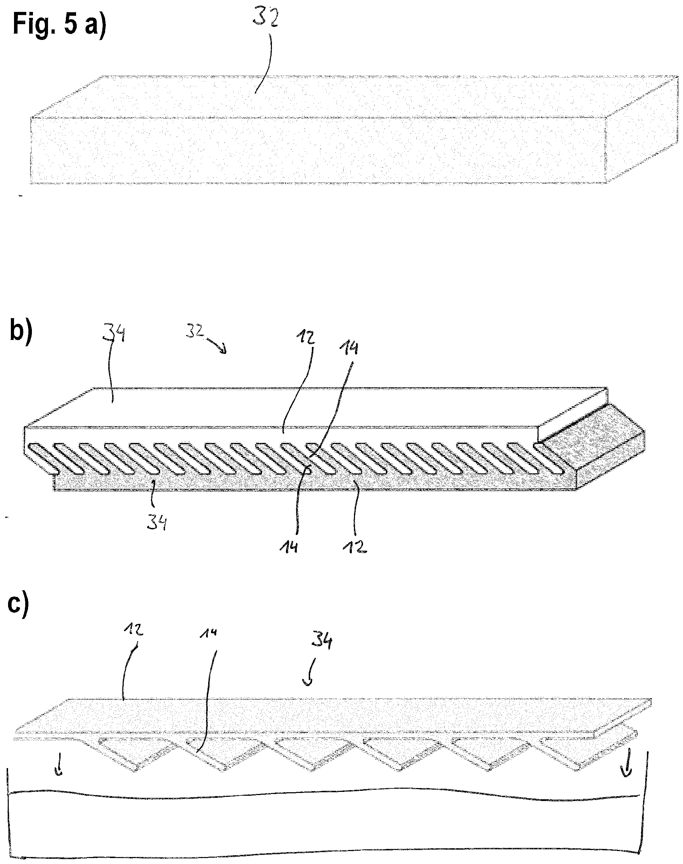

Zur Herstellung der Intumeszenz-Brandschutzvorrichtung 10 kann zunächst ein im Wesentlichen quaderförmiges Halbzeug 32 aus dem elastischen intumeszierenden Material des Basisabschnittes 12 bzw. der Lamellen 14 durch Extrusion bereitgestellt werden (Figur 5a).

In das Halbzeug 32 kann dann, beispielweise mittels eines Drahts, ein Schlitz eingebracht werden, der sich entlang der Längsrichtung L des quaderförmigen Halbzeugs 32 erstreckt. Der Schlitz beschreibt in Querrichtung Q betrachtet eine kammartige Form, die um eine Achse in Querrichtung Q rotationssymmetrisch ist.

Der Schlitz erstreckt sich entlang der gesamten Längserstreckung sowie der gesamten Breite B des Halbzeugs 32.

Durch den Schlitz wird das Halbzeug 32 in zwei Grundkörper 34 geteilt, die jeweils bereits einen Basisabschnitt 12 und Lamellen 14 aufweisen (siehe Figur 5b).

Da das Halbzeug 32 bereits aus einem intumeszierenden Material hergestellt war, sind die beiden Grundkörper 34 zugleich auch die fertigen Intumeszenz-Brandschutzvorrichtungen 10.

Im Falle, dass das Halbzeug 32 nicht bereits aus einem intumeszierenden Material hergestellt war, müssen die Grundkörper 34 noch beschichtet werden.

Diese Grundkörper 34 werden nun, wie in Figur 5c angedeutet, in ein Bad aus intumeszierendem Material bzw. dem Material der Beschichtung 22 getaucht oder durch ein solches Bad gezogen, wodurch die intumeszierende Beschichtung 22 auf den Lamellen 14 und dem Basisabschnitt 12 ausgebildet wird.

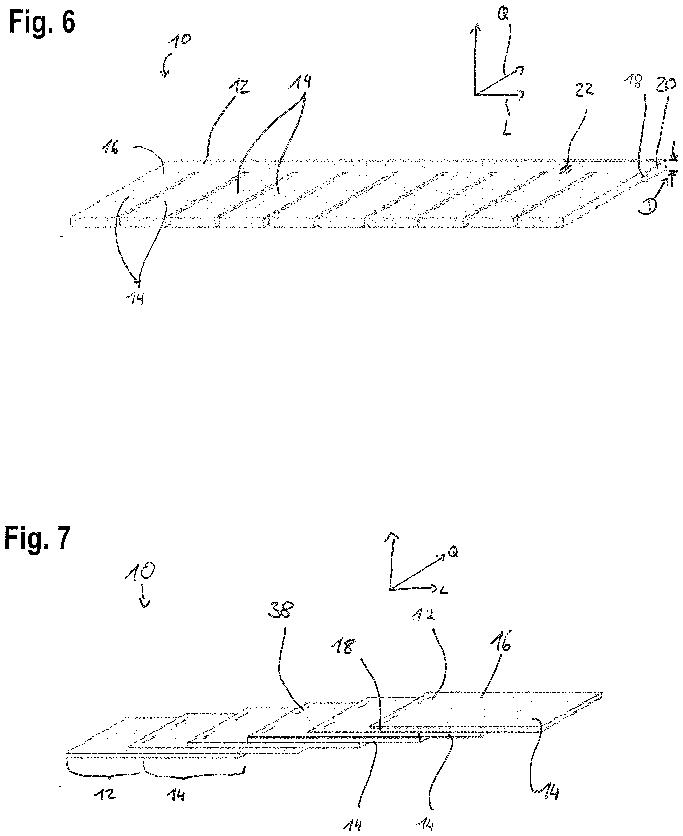

In den Figuren 6 und 7 sind weitere Ausführungsformen einer Intumeszenz-Brandschutzvorrichtung 10 dargestellt, die im Wesentlichen der ersten Ausführungsform der Intumeszenz-Brandschutzvorrichtung 10 entsprechen. Im Folgenden wird deswegen nur auf die Unterschiede eingegangen, wobei gleiche und funktionsgleiche Teile mit denselben Bezugszeichen versehen sind.

In Figur 6 ist eine zweite Ausführungsform der Intumeszenz-Brandschutzvorrichtung 10 dargestellt. Die Lamellen 14 erstrecken sich in dieser zweiten Ausführungsform alle von der gleichen Längskante 18 des Basisabschnittes 12 und haben die gleiche Dicke D wie der Basisabschnitt 12.

Falls es sich um eine beschichtete Intumeszenz-Brandschutzvorrichtung 10 handelt, können der Basisabschnitt 12 und die Lamellen 14 auf beiden ihrer Längsflächen 16 mit der Beschichtung 22 versehen sein. Denkbar ist auch, dass sie nur an einer ihrer Längsflächen 16 mit der Beschichtung 22 versehen sind, wobei dann die Länge des Basisabschnittes 12 so lang gewählt sein muss, dass der Basisabschnitt 12 zweilagig im Spalt zwischen Rohr 28 und Innenwand 30 verlaufen kann.

Zur Herstellung der Intumeszenz-Brandschutzvorrichtung 10 dieser Ausführungsform kann ein bandförmiger Grundkörper mit Dicke D, die der Dicke des Basisabschnittes 12 und den Lamellen 14 entspricht, extrudiert werden.

Dieser Grundkörper wird dann in regelmäßigen Abständen entlang der Längsachse L in Querrichtung Q eingeschnitten, um die einzelnen Lamellen 14 an der Längskante 18 auszubilden.

In der in Figur 7 gezeigten dritten Ausführungsform der Intumeszenz-Brandschutzvorrichtung 10 ist die Intumeszenz-Brandschutzvorrichtung 10 nicht einstückig ausgeführt, sondern besteht aus mehreren plattenförmigen Trägern 36.

Die Träger 36 sind teilweise überlappend angeordnet und einseitig aneinander befestigt, beispielsweise mittels Klammern 38 oder einer Naht. Jeder der Träger 36 bildet sowohl einen Teil des Basisabschnittes 12 als auch eine Lamelle 14.

Der Basisabschnitt 12 ist somit nicht einstückig ausgeführt, jedoch ist jede Lamelle 14 einstückig mit einem Teil des Basisabschnittes 12 ausgebildet.

In den gezeigten Ausführungsformen ist der Basisabschnitt 12 jeweils bandförmig ausgeführt und kann auf die benötigte Länge zurechtgeschnitten werden. Denkbar ist jedoch auch, dass der Basisabschnitt 12 bereits ein Ring mit einem vorgegebenen Durchmesser ist, wobei sich die Lamellen 14 dann radial nach innen erstrecken. Die Längsrichtung L des Basisabschnittes entspricht in diesem Falle der Umfangsrichtung des Ringes.

Selbstverständlich lassen sich die einzelnen Merkmale der gezeigten Ausführungsformen auch miteinander kombinieren.

## Patentansprüche

1. Intumeszenz-Brandschutzvorrichtung zum Verschließen von Durchbrüchen (24) in Wänden (26) oder Decken, mit einem flexiblen bandförmigen oder ringförmigen Basisabschnitt (12) und mehreren Lamellen (14), die sich vom Basisabschnitt (12) aus erstrecken und einstückig mit dem Basisabschnitt (12) ausgeführt sind, wobei der Basisabschnitt (12) und/oder die Lamellen (14) zumindest teilweise aus einem intumeszierenden Material hergestellt oder zumindest teilweise mit einer intumeszierenden Beschichtung (22) versehen sind.

2. Intumeszenz-Brandschutzvorrichtung nach Anspruch 1, **dadurch gekennzeichnet, dass** die Lamellen (14) gegenüber dem Basisabschnitt (12) beweglich sind, insbesondere größtenteils zum Basisabschnitt (12) hin verbogen werden können.

3. Intumeszenz-Brandschutzvorrichtung nach Anspruch 1 oder 2, **dadurch gekennzeichnet, dass** die intumeszierende Beschichtung (22) zumindest im Bereich zwischen einer der Lamellen (14) und dem Basisabschnitt (12) vorgesehen ist.

4. Intumeszenz-Brandschutzvorrichtung nach einem der vorhergehenden Ansprüche, **dadurch gekennzeichnet, dass** die Lamellen (14) und/oder der Basisabschnitt (12) vollständig aus einem intumeszierenden Material oder im Wesentlichen vollständig beschichtet sind.

5. Intumeszenz-Brandschutzvorrichtung nach einem der vorhergehenden Ansprüche, **dadurch gekennzeichnet, dass** der Basisabschnitt (12) und die Lamellen (14) aus einem elastischen, insbesondere intumeszierenden Material hergestellt sind.

6. Intumeszenz-Brandschutzvorrichtung nach einem der vorhergehenden Ansprüche, **dadurch gekennzeichnet, dass** alle Lamellen (14) auf einer Seite des Basisabschnittes (12) vorgesehen sind.

7. Intumeszenz-Brandschutzvorrichtung nach einem der vorhergehenden Ansprüche, **dadurch gekennzeichnet, dass** der Basisabschnitt (12) zwei gegenüberliegende Längsflächen (16) aufweist, wobei sich die Lamellen (14) von einer der Längsflächen (16) aus erstrecken.

8. Intumeszenz-Brandschutzvorrichtung nach einem der vorhergehenden Ansprüche, **dadurch gekennzeichnet, dass** der Basisabschnitt (12) zwei gegenüberliegende Längskanten (18) aufweist, wobei sich die Lamellen (14) von einer der Längskanten (18) aus erstrecken.

9. Intumeszenz-Brandschutzvorrichtung nach einem der vorhergehenden Ansprüche, **dadurch gekennzeichnet, dass** sich die Lamellen (14) in einem spitzen Winkel vom Basisabschnitt (12) aus erstrecken.

10. Intumeszenz-Brandschutzvorrichtung nach einem der vorhergehenden Ansprüche, **dadurch gekennzeichnet, dass** die Lamellen (14) eingeschnitten sind.

11. Intumeszenz-Brandschutzvorrichtung nach einem der vorhergehenden Ansprüche, **dadurch gekennzeichnet, dass** die Intumeszenz-Brandschutzvorrichtung (10) durch ein Extrusionsverfahren hergestellt ist.

12. Durchbruch in einer Wand (26) oder einer Decke, mit einer Innenwand (30) und einer an der Innenwand (30) anliegenden Intumeszenz-Brandschutzvorrichtung (10) gemäß einem der vorhergehenden Ansprüche, **dadurch gekennzeichnet, dass** sich die Lamellen (14) vom Basisabschnitt (12) aus radial nach innen oder axial erstrecken.

13. Durchbruch nach Anspruch 12, **dadurch gekennzeichnet, dass** die Lamellen (14) gegenüber dem Basisabschnitt (12) vorgespannt sind.

14. Verfahren zur Herstellung von Intumeszenz-Brandschutzvorrichtungen (10) gemäß einem der Ansprüche 1 bis 11, mit den folgenden Schritten:
a) Extrusion eines im Wesentlichen quaderförmigen Halbzeugs (32), insbesondere aus einem intumeszierendem Material, und
b) Symmetrisches Zerschneiden des Halbzeugs (32), sodass zwei Intumeszenz-Brandschutzvorrichtungen (10) mit Lamellen (14) und je einem Basisabschnitt (12) ausgebildet werden.

15. Verfahren nach Anspruch 14, **dadurch gekennzeichnet, dass** nach dem Zerschneiden die beiden Intumeszenz-Brandschutzvorrichtungen (10) mit der intumeszierenden Beschichtung (22) beschichtet werden.
